# EUROPEAN PATENT APPLICATION

(11) **EP 3 396 181 A1**
(43) Date of publication of application: **31.10.2018**
(21) Application number: 18167364.1
(22) Date of filing: 13.04.2018
(51) Int. Cl.: F16B 37/04, F16B 37/08

(54) **FASTENER FOR MOUNTING ON A SUPPORT**

(30) Priority: 28.04.2017 ES 201730646
(71) Applicant: A. Raymond et Cie, 38000 Grenoble (FR); Estamp SAU, 08227 Terrassa (ES)
(72) Inventor: HUALDE RAMÓN, Francisco Javier, 08221 Terrassa (ES); VILLARROYA TORÁN, Ricard, 08600 Berga (ES)
(74) Representative: Elzaburu S.L.P.

(57) **Abstract**

Fastener (1) for mounting on a support, comprising:
- a body (2) with an axial hollow (3), comprising a central part (4) and a plurality of flexible legs (3) around the central part (4), and
-a base (6), comprising a main part (7) with a central hollow (8) from which a plurality of rotating legs (9) project, each rotating leg (9) being adapted to pivot around a hinge (10) which connects the rotating leg (9) to the main part (7) of the base (6), each rotating leg (9) being able to adopt a retracted position and an extended position, such that in the extended position the rotating leg (9) has pivoted outwardly around the hinge (10) with respect to the retracted position,
wherein the base (6) additionally comprises a plurality of holes (11) around the central hollow (8), the holes (11) adjacent to the rotating legs (9) having a protrusion (12) projecting outwardly with respect to the central hollow (8), such that in a mounted position of the fastener (1) the flexible legs (5) are inserted into the holes (11) adjacent to the rotating legs (9), and the central part (4) of the body (2) with an axial hollow (3) is inserted into the central hollow (8) of the base (6), such that, on insertion of the central part (4) of the body (2) with an axial hollow (3) into the central hollow (8) of the base (6), the rotating legs (9) of the base (6) pass from the retracted position to the extended position.

## Description

### Field of the invention

The present invention relates to a fastener of the type used for the mounting thereof on a support.

### Background of the invention

Different fastening devices provided with legs or elements for the fastening thereof to a panel are known.

Document FR 2776345 describes a fastener for mounting which comprises a body made of plastic material with an axial hollow. This body has a support flange on the periphery of the opening of a panel and a foot to fasten the body on the panel adapted to pass through said opening. The foot comprises a plurality of tabs that include retaining tabs, arranged in the shape of a barrel when they are not acted upon. The fastener further comprises a finger adapted to be inserted into the recess in order to lock the fastener to the panel. The insertion of the finger causes the separation of the free ends of the retaining tabs, such that the fastener presses on the panel, which remains fastened between the support flange and the free end of the retaining tabs.

Document FR 2193749 describes a plastic fastener for fastening walls of boxes or other containers in such a way that they may be separated. The fastener comprises a female member and a male member, adapted to be joined in such a way that they can be separated from one another. The female member includes a hollow tubular part and has a pair of claws connected to at least one end of said tubular hollow part in opposite positions from one another on said end. Said claws can move between a non-operative position, wherein they do not move laterally beyond the periphery of said hollow part, and an operative position, wherein said claws move laterally and extend in a way that is substantially perpendicular to the axis of said tubular hollow part.

Document EP 2047126 B1 describes a fastener that has a fastening foot that includes triangular shaped legs with support members for reinforcement and flaps, wherein the fastener is made of a molded plastic material. The legs pass from a retracted position to an extended position and make a hinge pivot due by deformation during the insertion of a plastic finger or rod (in other words, a pin in an elongated parallelepiped shape). The reinforcement members have a free end that butts up against the finger when the finger is inserted in the axial hollow in a locking position, such that the legs maintain an extended position.

Although these fastening devices are normally satisfactory, any improvement in the operation thereof constitutes significant progress.

### Summary of the invention

The object of the present invention is to therefore provide a fastener for mounting on a support that prevents the movement of the fastener on the support.

The invention provides a fastener for mounting on a support that comprises:
- a body with an axial hollow, comprising a central part and a plurality of flexible legs arranged around the central part, and
- a base, comprising a main part with a central hollow from which a plurality of rotating legs project, each rotating leg being adapted to pivot around a hinge which connects the rotating leg to the main part of the base, each rotating leg being able to adopt a retracted position and an extended position, such that in the extended position the rotating leg has pivoted outwardly around the hinge with respect to the retracted position,
wherein the base additionally comprises a plurality of holes around the central hollow, the holes adjacent to the rotating legs having a protrusion projecting outwardly with respect to the central hollow, such that in a mounted position of the fastener the flexible legs are inserted into the holes adjacent to the rotating legs, and the central part of the body with an axial hollow is inserted into the central hollow of the base, such that, by inserting the central part of the body with an axial hollow into the central hollow of the base, the rotating legs of the base pass from the retracted position to the extended position.

By mounting the fastener on a support, the configuration of the fastener for mounting on a support of the invention allows the flexible legs of the body with an axial hollow to be in contact with the protrusions of the base and, by the support remaining in contact with the rotating legs and the protrusions of the base, a more secure fastening of the support is achieved.

Other advantageous embodiments of the invention are presented in the dependent claims.

### Brief description of the drawings

Described below is an illustrative embodiment, which is by no means limiting, of the object of the present invention, referring to the attached drawings, in which:
Figure 1 shows a perspective view of the elements of the fastener for mounting on a support of an embodiment of the invention.
Figure 2 shows cross-sectional view of the elements of the fastener for mounting on a support of an embodiment of the invention.
Figure 3 shows a cross-sectional view rotated 45° of the elements of the fastener for mounting on a support of an embodiment of the invention.
Figure 4 shows a perspective view of the elements of the fastener for mounting on a support of an embodiment of the invention at the beginning of the mounting thereof.
Figure 5 shows a cross-sectional view of the object of figure 4.
Figure 6 shows a cross-sectional view rotated 45° of the object of figure 4.
Figure 7 shows a perspective view of a fastener of an embodiment of the invention on a support, at the beginning of the mounting thereof.
Figure 8 shows a front view of figure 7.
Figure 9 shows cross section of the elements of the fastener for mounting on a support of an embodiment of the invention at the end of the mounting thereof.
Figures 10 to 13 show different views of a fastener of an embodiment of the invention on a support, at the end of the mounting thereof.

### Detailed description of the invention

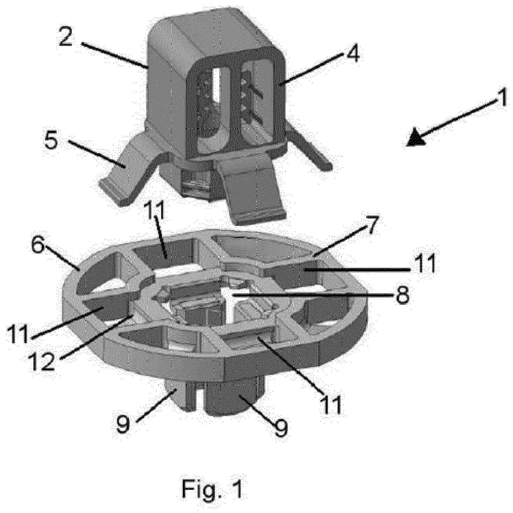

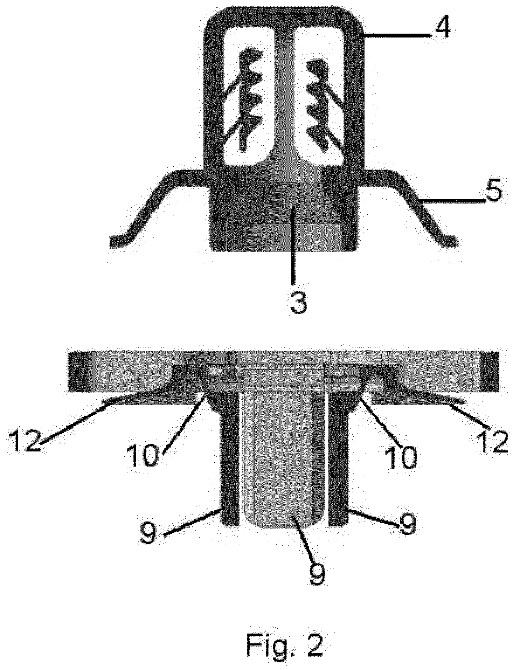

Figures 1, 2 and 3 show an embodiment of a fastener 1 for mounting on a support, with the components thereof in a position prior to assembly. This fastener 1 comprises:
- a body 2 with an axial hollow 3, comprising a central part 4 and a plurality of flexible legs 5 arranged around the central part 4, and
- a base 6, comprising a main part 7 with a central hollow 8 from which a plurality of rotating legs 9 project, each rotating leg 9 being adapted to pivot around a hinge 10 which connects the rotating leg 9 to the main part 7 of the base 6, each rotating leg 9 being able to adopt a retracted position and an extended position, such that in the extended position the rotating leg 9 has pivoted outwardly around the hinge 10 with respect to the retracted position.

Figure 1 also shows that the base 6 additionally comprises a plurality of holes 11 arranged around the central hollow 8, the holes 11 adjacent to the rotating legs 9 having a protrusion 12 projecting outwardly with respect to the central hollow 8, such that in a mounted position of the fastener 1 the flexible legs 5 are inserted into the holes 11 adjacent to the rotating legs 9, and the central part 4 of the body 2 with an axial hollow 3 is inserted into the central hollow 8 of the base 6. This way, by inserting the central part 4 of the body 2 with an axial hollow 3 in the central hollow 8 of the base 6, the rotating legs 9 of the base 6 pass from a retracted position to an extended position.

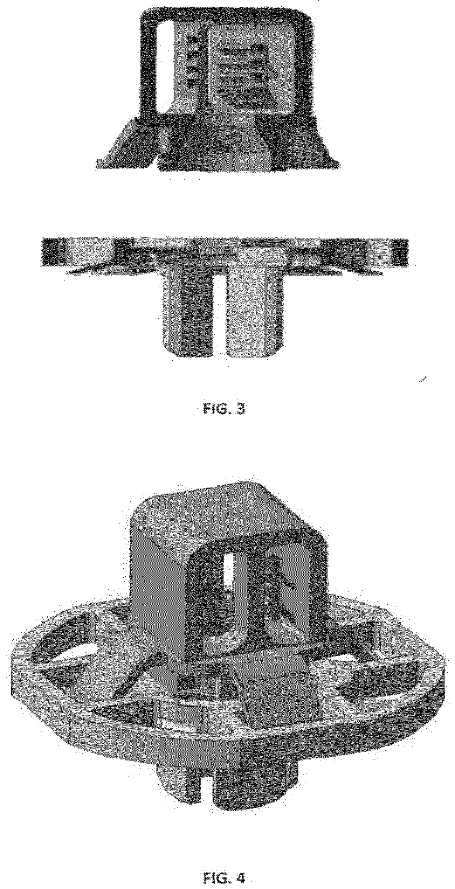

Figures 4 to 6 show different views of the elements of the fastener for mounting on a support of an embodiment of the invention at the beginning of the mounting thereof. One can see that the flexible legs 5 are inserted into the holes 11 adjacent to the rotating legs 9, and the central part 4 of the body 2 with an axial hollow 3 is inserted into the central hollow 8 of the base 6.

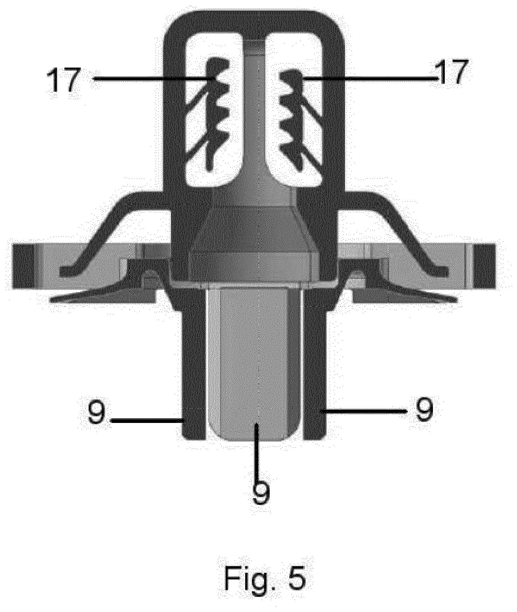

In figure 5 one can see that the body 2 has still not made contact with the rotating legs 9, and thus said legs remain vertical in said figure.

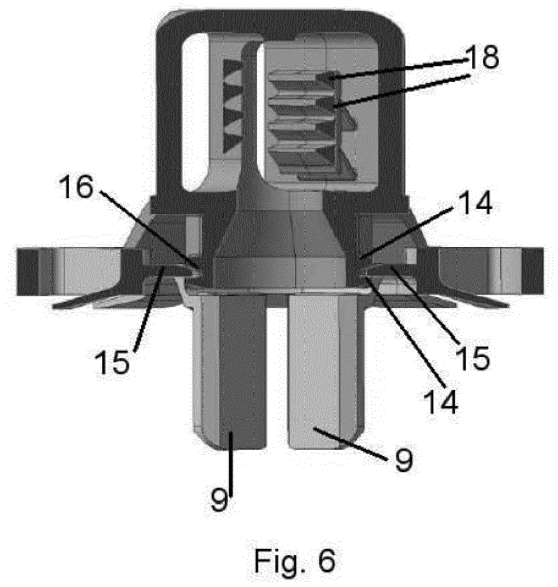

In figure 6 one can see that the central part 4 of the body 2 with an axial hollow 3 comprises a plurality of sets of at least two teeth 14, and the main part 7 of the base 6 comprises a plurality of retention legs 15, such that each retention leg 15 is adapted to fit into the gaps 16 between the teeth 14 in each set of teeth 14. In figure 6 one can see that the retention legs 15 are in the gaps 16 between two teeth 14.

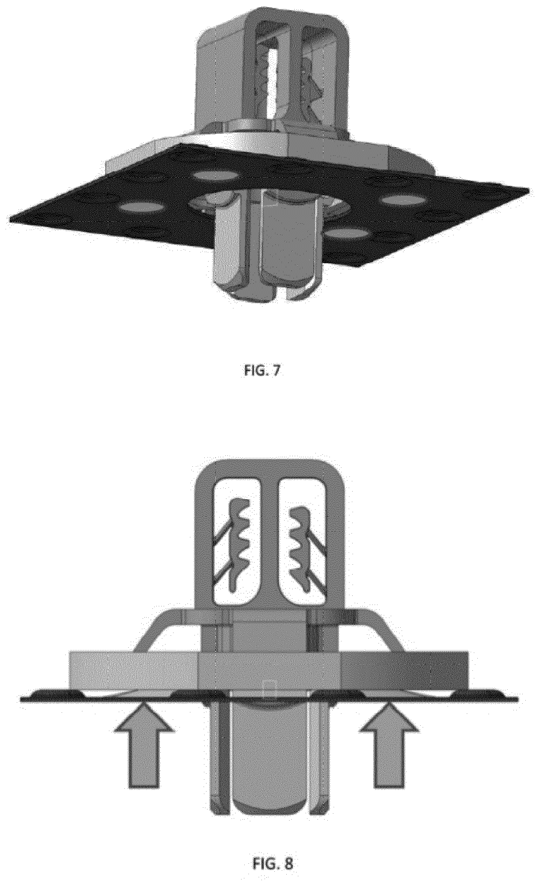

Figures 7 and 8 show views of a fastener of an embodiment of the invention on a support, at the beginning of the mounting thereof, figure 8 showing a front view of figure 7.

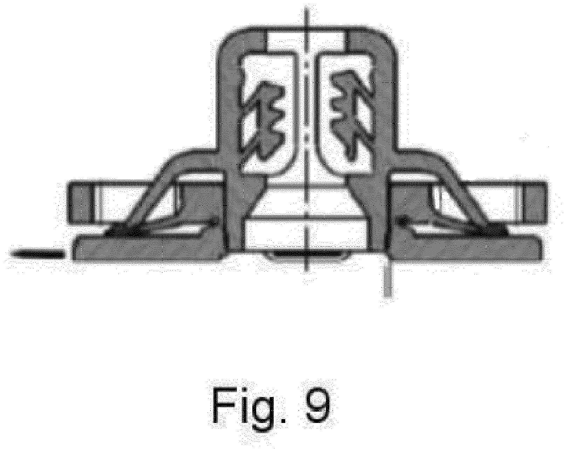

Figure 5 shows a cross section of the elements of the fastener for mounting on a support of an embodiment of the invention at the beginning of the mounting thereof, and figure 9 shows said elements at the end of the mounting thereof. As can be seen, the rotating legs 9 pivot around the hinges 10 as the central part 4 of the body 2 with an axial hollow 3 is inserted into the central hollow 8 of the base 6, until reaching the final position, with the rotating legs arranged horizontally according to figure 9.

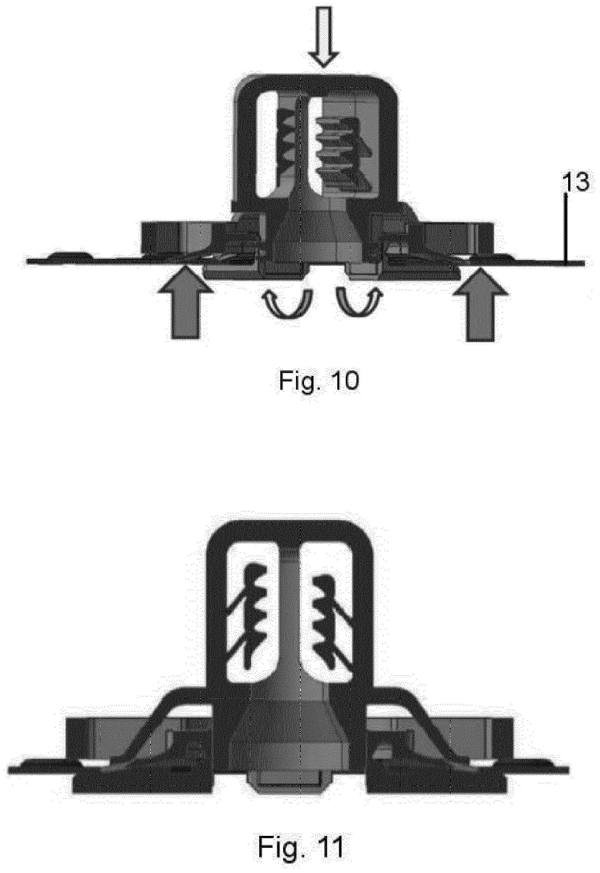

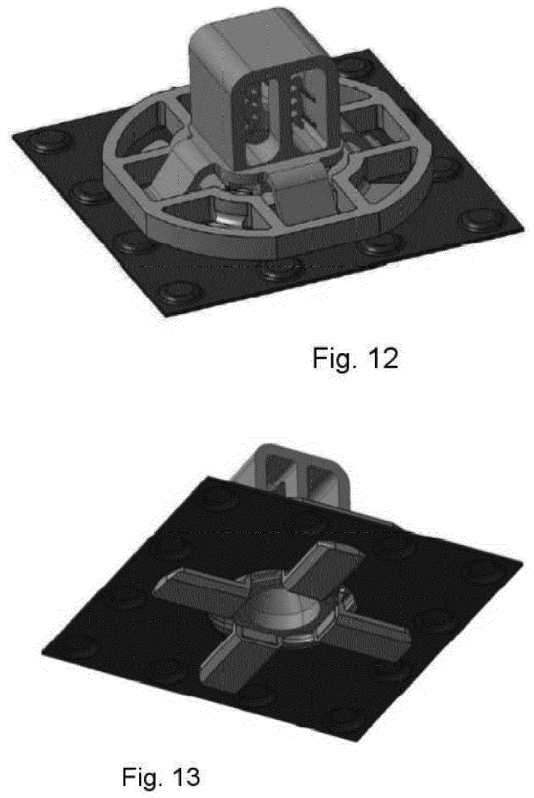

Figures 10 to 13 show different views of a fastener of an embodiment of the invention on a support, at the end of the mounting thereof. In figure 10 one can see that the retention legs are above the last tooth 14, and the rotating legs are arranged horizontally, having pivoted around the hinge by the push of the central part 4 of the body 2.

This way, the assembly comprising the fastener 1 and the support 13 has a sandwich arrangement, the support 13 being placed between the rotating legs 9 and the protrusions 12 of the base 6 and the flexible legs 5 of the body 2 with an axial hollow 3 abutting the protrusions 12. This allows for a secure fastening of the fastener 1 on the support 13, preventing relative movement between both elements.

In figures 5 and 6 one can also see that the axial hollow 3 of the body 2 comprises two parts 17 with retaining means 18 for engaging the thread of a stud, to make the coupling of said stud with the fastener 1 possible.

Preferably, the fastener 1 is made of plastic.

Although embodiments of the invention have been represented and described, it is evident that modifications comprised within the scope of the same can be introduced, the invention not being limited to said embodiments, rather only to the content of the following claims.

## Claims

1. Fastener (1) for mounting on a support, comprising:
- a body (2) with an axial hollow (3), comprising a central part (4) and a plurality of flexible legs (3) around the central part (4), and
- a base (6), comprising a main part (7) with a central hollow (8) from which a plurality of rotating legs (9) project, each rotating leg (9) being adapted to pivot around a hinge (10) which connects the rotating leg (9) to the main part (7) of the base (6), each rotating leg (9) being able to adopt a retracted position and an extended position, such that in the extended position the rotating leg (9) has pivoted outwardly around the hinge (10) with respect to the retracted position,
**characterized in that**
the base (6) additionally comprises a plurality of holes (11) around the central hollow (8), the holes (11) adjacent to the rotating legs (9) having a protrusion (12) projecting outwardly with respect to the central hollow (8),
such that in a mounted position of the fastener (1) the flexible legs (5) are inserted into the holes (11) adjacent to the rotating legs (9), and the central part (4) of the body (2) with an axial hollow (3) is inserted into the central hollow (8) of the base (6),
such that, on insertion of the central part (4) of the body (2) with an axial hollow (3) into the central hollow (8) of the base (6), the rotating legs (9) of the base (6) pass from the retracted position to the extended position.

2. Fastener (1) for mounting on a support according to claim 1, wherein when the fastener (1) is mounted on a support (13), the assembly comprising the fastener (1) and the support (13) has a sandwich arrangement, the support (13) being placed between the rotating legs (9) and the protrusions (12) of the base (6), and the flexible legs (5) of the body (2) with an axial hollow (3) abutting the protrusions (12).

3. Fastener (1) for mounting on a support, according to any of the previous claims, wherein the central part (4) of the body (2) with an axial hollow (3) comprises a plurality of sets of at least two teeth (14), and the main part (7) of the base (6) comprises a plurality of retention legs (15), such that each retention leg (15) is adapted to fit into the gaps (16) between the teeth (14) in each set of teeth (14).

4. Fastener (1) for mounting on a support, according to any of the previous claims, wherein the axial hollow (3) comprises two parts (17) with retaining means (18) for engaging the thread of a stud.

5. Fastener (1) for mounting on a support, according to any of the previous claims, wherein the fastener (1) is made of plastic.
